Europäisches Patentamt

European Patent Office

Office européen des brevets

(19)

(11) Veröffentlichungsnummer: **0 379 684 B1**

(12) **EUROPÄISCHE PATENTSCHRIFT**

(45) Veröffentlichungstag der Patentschrift: **27.10.93**

(21) Anmeldenummer: **89122500.5**

(22) Anmeldetag: **06.12.89**

(51) Int. Cl.5: **B29B 13/06**, B29B 13/00, F26B 3/08, //B29K67:00

(54) **Verfahren und Vorrichtung zum kontinuierlichen Kristallisieren von Polyestermaterial.**

(30) Priorität: **23.12.88 CH 4796/88**

(43) Veröffentlichungstag der Anmeldung:
**01.08.90 Patentblatt 90/31**

(45) Bekanntmachung des Hinweises auf die
Patenterteilung:
**27.10.93 Patentblatt 93/43**

(84) Benannte Vertragsstaaten:
**AT BE CH DE ES FR GB GR IT LI LU NL SE**

(56) Entgegenhaltungen:
CH-A- 450 367      CH-A- 665 473
DE-A- 2 240 524    DE-A- 2 544 048
DE-B- 1 454 847    FR-A- 1 352 614
FR-A- 1 478 224    FR-A- 1 550 402
GB-A- 1 362 927    US-A- 3 544 525
US-A- 3 691 644    US-A- 4 231 991

AUFBEREITUNGS-TECHNIK, Band 14, Nr. 9,
September 1973, Seiten 566-570; M.ENDERS:
"Das Trocknen von Thermoplasten"

(73) Patentinhaber: **BÜHLER AG**

**CH-9240 Uzwil(CH)**

Patentinhaber: **Bühler GmbH**
**Ernst-Amme-Strasse 19**
**D-38114 Braunschweig(DE)**

(72) Erfinder: **Rüssemeyer, Hans**
**Hagenkamp 1**
**D-3301 Schwülper OT Walle(DE)**
Erfinder: **Kerl, Manfred**
**Fallersleberstrasse 50**
**D-3300 Braunschweig(DE)**
Erfinder: **Schmidt, Hans-Joachim**
**Richard-Strauss-Weg 10**
**D-3300 Braunschweig(DE)**
Erfinder: **Häni, Beat**
**Alpsteinstrasse 16**
**CH-9524 Zuzwil(CH)**
Erfinder: **Kägi, Werner**
**Henauerstrasse 15**
**CH-9244 Niederuzwil(CH)**

EP 0 379 684 B1

**Beschreibung**

Die Erfindung betrifft ein Verfahren zum kontinuierlichen Kristallisieren von Polyestermaterial, wie Granulat oder grobem Pulver, gemäß dem Oberbegriff des Patentanspruchs 1, sowie eine zur Durchführung des Verfahrens geeignete Vorrichtung, gemäß dem Oberbegriff des Patentanspruchs 7.

Lineare, thermoplastische Polyester, in erster Linie Polyäthylenterephthalat, haben aufgrund ihrer guten physikalischen Eigenschaften eine große Bedeutung erlangt und viele Anwendungen gefunden. Der überwiegende Anteil wird zu textilen Fasern und Filamenten verarbeitet. Des weiteren werden Folien als Träger- oder Verpackungsmaterial und Spritzgußartikel daraus hergestellt. Ein wachsender Markt besteht im Einsatz von hochmolekularen Polyäthylenterephthalat für Flaschen oder Behälter in der Lebensmittelindustrie, vor allem für kohlensäurehaltige Getränke.

Je nach Verwendungszweck sind besondere Eigenschaften des Polyestermateriales erforderlich. Gewisse Eigenschaften können bereits bei der Rezeptur des Polyesters durch Diol- und/oder Dicarbonsäure-Co-Komponenten sowie Additive gezielt modifiziert werden. Andere Eigenschaften wie hohes Molekulargewicht (hohe Intrinsic-Viskosität) und hohe Reinheit (tiefer Acetaldehydgehalt für den Lebensmittelbereich) sind erst durch eine Nachbehandlung in fester Phase erreichbar. Vielfach werden Polyesterproduktion und Weiterverarbeitung zum Fertigartikel getrennt durchgeführt, so daß man als Zwischenstufe ein Granulat herstellt, welches wegen der geringen Kristallisationsgeschwindigkeit und der schnellen Abkühlung in amorpher Form anfällt. Beim Granulieren und der Lagerung nimmt das Granulat Feuchtigkeit auf. Da jegliches anwesendes Wasser beim späteren Wiederaufschmelzen zu entsprechender Hydrolyse des Polyesters führt, muß das Granulat zuvor auf einen sehr tiefen Wassergehalt getrocknet werden. Bei Temperaturen von über 100°C haben die amorphen Polyestergranulate aber eine starke Tendenz, miteinander zu verkleben. Gleichzeitig setzt bei kristallisierenden Polyestern die Kristallisation ein, die jedoch wie bei allen Makromolekülen nur partiell ist (Endwert bei Polyäthylenterephthalat ca. 45% unter üblichen Bedingungen). Damit das Granulat in den nachfolgenden thermischen Behandlungsstufen (sei es nun Trocknung oder Festphasennachkondensation) nicht mehr klebt und rieselfähig bleibt, muß es gemäß Whitehead in "Industrial Engineering Chemistry, Process Design Development, Vol. 16, No. 3, 1977, 341-346" im Falle von Polyäthylenterephthalat eine Mindestdichte von 1,37 g/cm$^3$ (entsprechend einem Kristallisationsgrad von 31%) aufweisen. Von anderen Autoren, z.B. in DE-OS 2 140 265, werden etwas niedrigere Werte angegeben.

Die Schwierigkeit bei der Kristallisation besteht darin, während der kritischen Klebephase die Bildung von Agglomeraten und Anbackungen im Kristallisationsapparat zu verhindern. Für das Kleben sind Van-der-Waals'sche Kräfte verantwortlich, die an den Granulatgrenzen wirksam sind. Diese werden durch Kristallisation abgesättigt. Im ruhenden Zustand können im Verlaufe der Kristallisation an den Berührungsstellen aber kristalline Bereiche (Sphärolithe) auch von einem Polymerteilchen zum anderen hinüberwachsen, was zu irreversiblen Verbindungen führen kann. Deshalb werden zur Verhinderung von Verklebungen die Granulatkörner bei vielen Kristallisationsverfahren in ständiger Bewegung gehalten, um die Berührungspunkte jeweils vor Ablauf der kritischen Kontaktzeit wieder aufzulösen, so daß die teilchenüberschreitenden Kristallwachstumsprozesse schon im Anfangsstadium unterbrochen werden, und sich keine permanenten Verklebungen ausbilden können. Zu diesen Verfahren gehört die Kristallisation im Taumelmischer. Sie ist aber apparativ und wegen der Chargenfahrweise auch in der Bedienung sehr aufwendig. Verbreitet ist die kontinuierliche Kristallisation in einer gerührten Schüttung.

Die entsprechenden Behälter weisen Rührorgane auf, welche das Granulat im wesentlichen quer zur Fließrichtung bewegen. Solche Kristallisatoren sind sowohl als liegende Apparate (z.B. US-PS 4 223 128 und US-PS 4 161 578) als auch als vertikaler, oberer Teil von Schachtreaktoren bekannt (z.B. DE-OS 32 13 025). Durch die Zwangsbewegung des Rührers können aber im Granulat unkontrolliert hohe mechanische Belastungen mit Abriebbildung oder Deformation im plastischen Zustand auftreten. Am Rührorgan selber kann Material anbacken, und bei Kontaktheizung über die Wand kommt noch das Problem der Uebertemperatur in der Randzone dazu.

Ohne mechanische Einbauten arbeitet eine Wirbelschicht. Ein Wirbelbettapparat hat ein grösseres spezifisches Volumen und bedingt aus energetischen Gründen die Führung des Prozessgases (Luft) in einem Kreislauf. Der Hauptnachteil einer üblichen Wirbelschicht, z.B. nach der DE-OS 1 467 213, besteht bei kontinuierlichem Betrieb aber im breiten Verweilzeitspektrum, das eine Streuung des Kristallisationsgrades und der gleichzeitig stattfindenden Vortrocknung zur Folge hat. Wirbelbetten mit homogenerem Verweilzeitspektrum, z.B. nach der DE-AS 20 53 876 haben aber einen relativ kleinen Durchsatz, und einen tiefen thermischen Wirkungsgrad.

Als Konsequenz der obigen Nachteile wurden Kristallisationsverfahren entwickelt, die das Verkleben des Granulates nicht mehr zu vermeiden suchen, sondern die Granulatsäule in einem Schachtapparat bewußt zusammenkleben liessen (DE-AS 25 58 730 und DE-OS 26 42 102). Dadurch erhielt man eine einheitliche Verweilzeit und musste das Granulat während der Kristallisation nicht mechanisch beanspruchen. Durch schichtweises Abtragen von der Unterseite her, sollte der Agglomeratklotz wieder in ein rieselfähiges Granulat überführt werden. Wegen schwierig zu kontrollierender Temperaturführung (wegen der Exothermie der Kristallisation) mit nicht genau einstellbarer Verklebungsstärke konnte es aber zu derart starker Agglomerierung kommen, daß die mechanische Abtragung nicht mehr möglich war. Im Normalbetrieb entstand durch die Agglomeratzerkleinerung störender Staub.

In Anbetracht der Schwierigkeiten bei der Kristallisation wurde als Ersatz dafür auch schon vorgeschlagen, zur Unterbindung der Klebeneigung die Granulatoberfläche mit einem feinen Pulver zu bedecken. Dieses Verfahren hat aber den Nachteil, dass der Polyester nachher eine zusätzliche Substanz enthält (nicht anwendbar für Flaschengranulat) oder das Additiv nach der Temperaturbehandlung wieder quantitativ entfernt werden muss (z.B. US-PS 4 130 551) Zudem ist eine Vorrichtung für die Pulverzugabe notwendig. Anwendbar wäre das Verfahren höchstens mit Titandioxid für schlecht kristallisierende Copolyester, die ohnehin mattiert würden (vgl. DE-OS 2 124 203).

In der DE-OS 25 44 048 werden ein Verfahren und eine Einrichtung zur thermischen Behandlung klebriger Materialien beschrieben. Die zur Anwendung kommenden Schwebe- und Vibrationstrockner bewirken jedoch ein Verkleben der Teilchen durch ungleichmäßige Trocknung. Bekannt ist die Anwendung eines Wirbelbettes mit Mischcharakteristik (US-A-3 544 525), wobei jedoch kristallisierte und nicht fertig kristallisierte Pellets vermischt werden. Ein Sprudelbett mit Mischcharakteristik wird auch in der FR-PS 1 352 614 beschrieben. Der nachgeschaltete Schachttrockner bewirkt ebenfalls eine Verklumpungsneigung des Gutes (vgl. auch FR-A- 1 478 224 und "Das Trocknen von Thermoplasten" (M. Enders in: Aufbereitungstechnik, Bd. 14, Nr. 9/1973, Seiten 566-570).

Ein verbessertes Kristallisationsverfahren ist in der CH-Patentschrift 665 473 beschrieben: verwendet wird eine sprudelnde Wirbelschicht, der durch eine besondere Konstruktion eine Kolbenströmung überlagert ist, so daß eine enge Verweilzeitverteilung resultiert und die mittlere Aufenthaltszeit kurz sein kann. Verfahren und Vorrichtung stellen für Polyäthylenterephthalat eine gute wirtschaftliche Lösung dar. Für sehr langsam kristallisierende und dadurch eine längere Klebephase aufweisende Copolyester ist allerdings dieser Apparat nicht geeignet, da sich trotz wirbelnder Bewegung Agglomerat-Klumpen bilden können.

Speziell für die Flaschenherstellung wird heute oft nicht mehr reines Polyäthylenterephthalat eingesetzt, sondern das PET wird mit Co-Komponenten modifiziert. Als Co-Komponenten kommen beliebige Diole oder Dicarbonsäuren (bzw. entsprechende Diester) in Frage, durch welche das Aethylenglykol und/oder die Terephthalsäure teilweise ersetzt werden. Für Flaschengranulat werden z.B. Cyclohexan-1,4-dimethylol oder Isophthalsäure im Bereich von 0-5 mol-% verwendet (bezogen auf Diol- bzw. Dicarbonsäuremengen). Copolymere haben gegenüber dem Homopolymer einen erniedrigten Schmelzpunkt. Dies bringt bei der Flaschenherstellung den Vorteil mit sich, daß tiefere (um ca 5 ° C) Verarbeitungstemperaturen möglich sind, wodurch beim Spritzgiessen der Vorformlinge die nochmalige Bildung von Acetaldehyd durch thermische Abbaureaktionen reduziert wird. Der zweite Vorteil der einkondensierten Co-Komponenten liegt in der Behinderung der Kristallisation, was glasklare (100% amorphe) Vorformlinge und Flaschen ergibt (bei reinem PET kommen trotz schneller Abkühlung gelegentlich leichte Trübungen vor). Letzterer Umstand bedeutet natürlich, daß das Copolyestergranulat bei der Kristallisation ein extrem klebriges Verhalten zeigt. Ein derartiges Material konnte mit den bisherigen Verfahren gemäß dem Stand der Technik nicht störungsfrei kristallisiert werden. Theoretisch könnte zwar auch sehr klebriges Granulat sogar ohne Bewegung und ohne Agglomeratbildung kristallisiert werden, wenn dafür gesorgt würde, daß kein Granulatkorn ein anderes berührt. Eine solche Einzelkornbehandlung würde aber riesige Apparate geringer Produktivität bedingen, so daß diese Möglichkeit aus wirtschaftlichen Gründen außer Betracht fällt.

Der Erfindung liegt die Aufgabe zugrunde, die Kristallisation von zu starkem Kleben neigenden Polyestern in einem kontinuierlichen, kostengünstigen Prozeß mit den entsprechenden Vorrichtungen zuverlässig, materialschonend und mit einheitlicher Endqualität durchzuführen. Unter Polyester sollen hierbei sämtliche aus Diol- und Dicarbonsäurekomponenten aufgebauten Polymere verstanden werden. Bei den Diolen sind dies vor allem Alkylenglykole wie Aethylen-, 1,3-Propylen- oder 1,4 Butylenglykol sowie Cycloalkandiole wie Cyclohexan-1,4-diol oder Cyclohexan-1,4-dimethylol. Bei den Dicarbonsäuren sind in erster Linie Terephthal- und Isophthalsäure, Naphthalindicarbonsäuren sowie Adipin-, Sebazinsäure etc. zu nennen. Selbstverständlich kommen auch Gemische davon sowie geringe Anteile mehrfunktioneller Alkohole und Carbonsäuren in Frage, sowie organische oder anorganische Zusätze bis etwa 20 Gewichtsprozent. Die wichtigsten Polyesterarten sind aber Polyäthylenterephthalat und die darauf basierenden Copolyester. Die Korngeometrie kann von grobem Pulver bis zu den verschiedenen Granulatformen reichen.

Diese Aufgaße wird erfindungsgemäß dadurch gelöst, daß das Polyestermaterial durch zwei hintereinander geschaltete Wirbelbetten geführt wird, von denen das erste eine sprudelnde Wirbelschicht mit Mischcharakteristik, und das zweite ein Fliessbett mit Kolbenströmungscharakteristikist. Nach dem zweiten Wirbelbett können unabhängig und getrennt von der Kristallisation die verbliebenen Kleinagglomerate in einer Prallvorrichtung nachzerkleinert werden.

Daß dieses Vorgehen eine störungsfreie Kristallisation von klebrigem Polyester ermöglicht und am Schluß ein agglomeratfreies Granulat einheitlichen Kristallinitätsgrades liefert, ist überraschend und war nicht vorherzusehen. Eine Verbreiterung der Verweilzeitverteilung, wie sie durch das Sprudelbett zustande kommt, wurde bisher für unvereinbar mit einem homogenen Endprodukt gehalten. Zudem ließen sich sehr klebrige Copolyester bis jetzt nur unter mechanischer Rührung (mit den oben beschriebenen Nachteilen) kristallisieren. Unerwartet ist auch die Tatsache, daß die Kohäsionskraft der unter den erfindungsgemässen Bedingungen entstandenen Kleinagglomerate so gering ist, daß diese mit mässigem Kraftaufwand im Anschluss an die Kristallisation in die Einzelkörner aufgelöst werden können, wohingegen bei den konventionellen Verfahren unmittelbar während der Klebe- und Kristallisationsphase unter unkontrollierbaren Bedingungen eingegriffen werden muß, um irreversible Verklebungen zu verhindern.

Vorteilhafte Ausgestaltungen des erfindungsgemässen Verfahrens betreffen die Temperaturen der Granulate und des Behandlungsgases, den Gasdurchsatz und die Gasgeschwindigkeit in den Wirbelbetten, ferner Massverhältnisse der Wirbelbetten. Sie betreffen auch das Prallen zum Nachzerkleinern der Granulate.

Die erfindungsgemäße Vorrichtung zum Ausüben des Verfahrens ist dadurch gekennzeichnet, daß einem ersten Wirbelbett mit Mischcharakteristik ein zweites Wirbelbett mit Kolbenströmungscharakteristik nachgeschaltet ist. Vorteilhafte Ausgestaltungen der erfindungsgemässen Vorrichtung betreffen die Behälter der Wirbelbetten, ihre Maßverhältnisse, ihre Austragsvorrichtungen sowie die Prallvorrichtung.

Die Erfindung betrifft ferner die Anwendung des erfindungsgemässen Verfahrens und der erfindungsgemäßen Vorrichtung für die Behandlung von sehr langsam kristallisierenden Copolyestern.

Die Erfindung wird nachfolgend anhand eines zeichnerisch dargestellten Ausführungsbeispieles näher erläutert. Es zeigt:

Fig. 1 ein Fließschema des erfindungsgemäßen Verfahrens und der Vorrichtung, um das Nacheinanderschalten von Apparaten und die Granulatbewegung darzustellen,

Fig. 2 einen vertikalen Schnitt durch ein Ausführungsbeispiel des ersten Wirbelbettes der erfindungsgemäßen Vorrichtung längs der Linie II-II nach Fig. 3

Fig. 3 einen Schnitt längs der Linie III-III nach Fig. 2,

Fig. 4 einen vertikalen Schnitt durch ein Ausführungsbeispiel des zweiten Wirbelbettes der erfindungsgemäßen Vorrichtung längs der Linie IV-IV nach Fig. 5

Fig. 5 einen Grundriss des Wirbelbettes der Fig. 4,

Fig. 6 ein Diagramm, das den Agglomeratanteil in Funktion der mittleren Verweilzeit im ersten Wirbelbett zeigt.

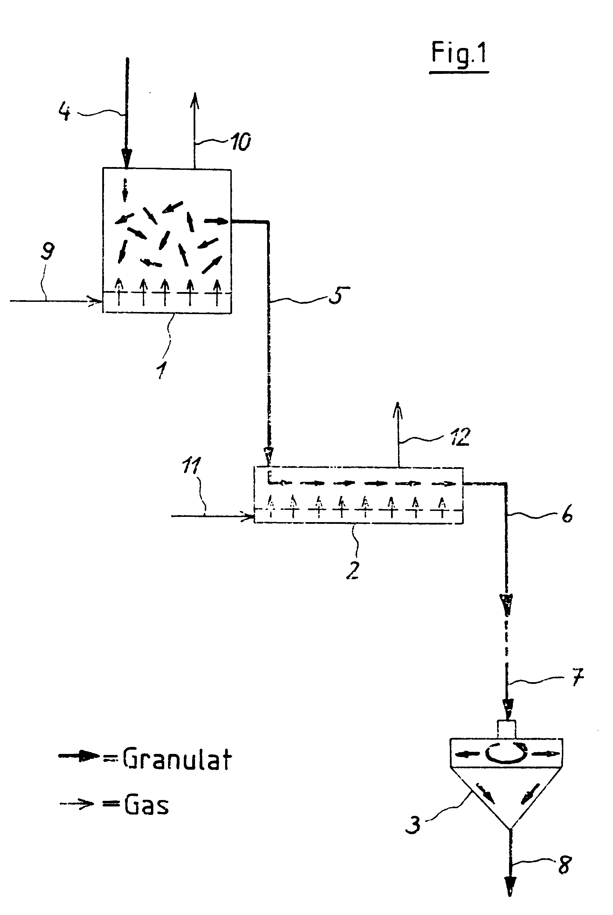

Die Fig. 1 zeigt das Sprudelbett als erstes Wirbelbett 1, das Fließbett als zweites Wirbelbett 2 und die Prallvorrichtung 3. Der eintretende, amorphe Granulatstrom 4 wird im Sprudelbett 1 unter intensiver Bewegung und Mischung mit bereits vorhandenen, kristallinem Material aufgeheizt und vorkristallisiert. Als Fluidisierungsgas, welches gleichzeitig als Wärmeträgermedium wirkt, wird erhitzte Luft oder ein Inertgas, z.B. Stickstoff, verwendet. Das Abgas 10 wird aus energetischen Gründen normalerweise in einem Kreislauf (mit Staubabscheidung) wieder an den Eintritt 9 geführt. Die Eintrittstemperatur des Gases wird so eingestellt, daß sich eine mittlere Granulattemperatur von 140-180 °C, vorzugsweise von ca. 160 °C ergibt. Die entsprechende Gaseintrittstemperatur beträgt 150-190 °C, vorzugsweise 170-175 °C. Der spezifische Gasdurchsatz zur Ausbildung einer intensiv bewegten Sprudelschicht beträgt 3-30 $m_n^3$ pro kg Granulatdurchsatz (Normalkubikmeter bezogen auf 0 °C und 1 atm = 760 Torr), insbesondere 5-20 $m_n^3$. Angestrebt wird eine Durchmischung wie in einem ideal gerührten Kessel. Die mittlere zu wählende Verweilzeit im Sprudelbett 1 hängt von der Klebetendenz des Materials ab und liegt zwischen ca. 5 Minuten für ein gutmütiges PET und ca. 60 Minuten oder mehr für einen klebrigen Copolyester (die mittlere Verweilzeit ist gleich dem Hold-up des Wirbelbettes dividiert durch den Granulatdurchsatz). Der aus dem Sprudelbett 1 austretende Granulatstrom 5 gelangt in das Fließbett 2, in welchem auch eine Fluidisierung stattfindet, aber nur so schwach, daß praktisch keine Vermischung vorkommt und sich das Material unter leichter Bewegung propfenströmungsartig verschiebt. Dadurch wird gewahrleistet, daß auch die ungefähr 2-5%, typischerweise 3-4%, noch amorphen Granulatkörner (erkennbar an der Transparenz) des Stromes 5 eine Mindestverweilzeit von ca. 2-25 Minuten im Wirbelbett 2 haben, um den kristallinen Zustand (d.h. den teilkristallinen Endwert) zu erreichen. Die Temperatur des zugeführten, heissen Gases 11 liegt 0-20 °C, vorzugsweise ca. 10 °C über derjenigen von Strom 9. Das Material erwärmt sich im Fließbett 2 nochmals um 10-30 °C, vorzugsweise auf ca 180 °C. Der spezifische Gasdurchsatz beträgt 1,5-15 $m_n^3$ pro kg Granulatdurchsatz. Das Abgas 12 wird normalerweise auch in einem Kreislauf wieder zurückgeführt. Wegen des stufenförmigen Verlaufes von Erwärmung und Kristallisation und der Gewährleistung einer entsprechenden Minimalverweilzeit weist das Granulat des austretenden Stromes 6 trotz der starken Verbreiterung des Verweilzeitspektrums durch das Sprudelbett 1 einen derart einheitlichen Kristallinitätsgrad auf, wie er bisher nur mit Batchkristallisatoren oder kontinuierlichen Vorrichtungen mit sehr enger Verweilzeitverteilung erreichbar war.

Gegenüber den herkömmlichen Vorrichtungen hat die Kombination von Sprudel- und Fließbett aber den Vorteil, daß trotz Verzicht auf mechanische Rührer sogar extrem klebrige Copolyester unter stabilen stationären Bedingungen ohne Anbackungen gleichmässig kristallisiert werden können und sich der Anteil und die Größe der Agglomerate in solchen Grenzen halten, daß das Produkt 6 immer noch freifliessend und rieselfähig ist. Letzterer Umstand erlaubt es, daß diese Agglomerate nicht direkt nach der Kristallisation zerkleinert werden müssen, sondern daß ohne Nachteile zuerst Trocknung oder Trocknung und Festphasen-Nachkondensation durchgeführt werden können, wie dies durch den punktierten Teil der Linie 6, 7 angedeutet ist.

Brückenbildung tritt bei der Kleinheit der Agglomerate (grösstenteils Paare von Granulatkörnern, Rest Dreier- und etwas Vierergrüppchen) nicht auf, und auf die Trocknungs- oder Nachkondensationsgeschwindigkeit wirken sich die entstandenen Agglomerate nicht verlangsamend aus, da diese in der Regel nicht Fläche an Fläche kleben, sondern über eine Kante, so daß sich die Oberfläche praktisch nicht verkleinert. Letzteres ist auch der Grund für die relativ geringe mechanische Festigkeit der beschriebenen Agglomerate. Es zeigte sich übrigens, daß die Agglomerate fast ausschließlich im Sprudelbett 1 entstehen und im Anteil und der Grössenverteilung im Fließbett 2 keine signifikante Änderung mehr erfahren. Da bei der Agglomeratzerkleinerung auch unter schonenden Bedingungen immer eine geringe Menge Bruchstücke und Staub entsteht, ist es bei einer Festphasennachkondensation von Vorteil, die Nachzerkleinerung (und allfällige Windsichtung) erst nachher zu machen, da Feinanteile schneller nachkondensieren (inhomogenes Endprodukt) und zudem noch eher zum Kleben neigen. Bei reiner Trocknung mit direkt nachfolgendem Extruder ist eine Nachzerkleinerung nicht notwendig, obwohl diese auch im heissen Zustand möglich wäre, da keine Extruder-Einzugsstörungen zu befürchten sind. Bei einer Festphasen-Nachkondensation ordnet man die Prallvorrichtung 3 vorteilhafterweise nach dem Granulatkühler an; in diesem Fall würde der in die Prallvorrichtung eintretende Strom 7 von den Agglomeraten her gesehen noch dem Strom 6 entsprechen, aber höheres Molekulargewicht und tiefere Temperatur aufweisen. Zum Auflösen der entstandenen Kleinagglomerate genügen Aufprallgeschwindigkeiten in der Grössenordnung von 10-50 m/sec, vorzugsweise 20-35 m/sec. Das Auflösen der Agglomerate kann im Prinzip mit jeder Vorrichtung geschehen, in der diese Geschwindigkeiten auftreten (z.B. auch pneumatisch). Vorteilhaft ist jedoch die Verwendung eines Wurfbrechers (Impactor), bei dem das agglomerathaltige Granulat von einem Rotor aus unter definierter Umfangsgeschwindigkeit auf Prallflächen (Prallplatten oder Prallring) geschleudert wird. Durch Drehzahlvariierung kann die minimale Aufprallgeschwindigkeit exakt ermittelt werden, die notwendig ist, um sämtliche Agglomerate aufzubrechen, und somit ist es möglich, das Produkt schonend unter genau kontrollierten physikalischen Bedingungen in ein einwandfreies Einzelgranulat überzuführen (Endproduktstrom 8). Von Weiterverarbeitern wird als Qualitätsmerkmal ein Agglomeratanteil im Granulat von weniger als 0,1 Gewichts-Prozent gefordert. Dieser Wert ist mit der erfindungsgemäßen Vorrichtung ohne Aussieben von Agglomeraten erreichbar, sofern nicht bereits im amorphen Ausgangsgranulat Agglomerate vorhanden sind, die meist stärker zusammengeschmolzen sind und sich mittels Aufprall nicht mehr trennen lassen.

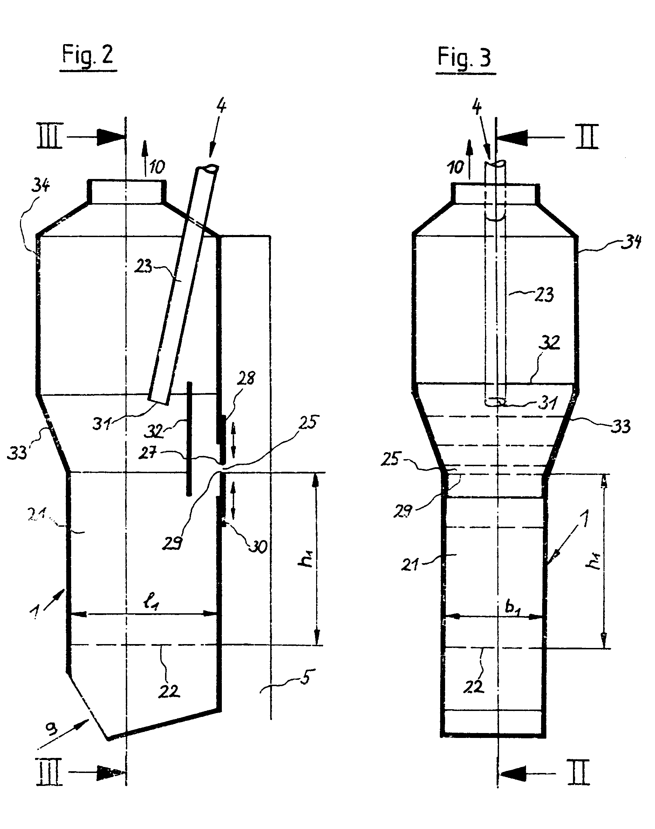

Das in den Fig. 2, 3 dargestellte erste Wirbelbett, d.h. das Sprudelbett 1, weist einen Behälter 21 auf, der unten mit einem Lochboden 22 versehen ist, dem der Strom 9 des Behandlungsgases zugeführt wird. Das Abgas 10 entweicht oben und wird meistens im Rundlauf zurückgeführt.

Der Granulatstrom 4 gelangt durch ein Fallrohr 23 in den Behälter 21. Der Strom 5 des behandelten Granulates tritt aus dem Behälter 21 durch einen Austragsspalt 25, deren oberer Rand 27 durch eine vertikal einstellbare Platte 28 gebildet ist, und deren unterer Rand 29 durch eine vertikal einstellbare Platte 30. Damit sind Höhenlage und Breite des Austragsspaltes 25 einstellbar, beziehungsweise regulierbar. Zwischen der durch den Auslass 31 des Fallrohres 23 gebildete Zufuhrstelle und dem Austragsspalt 25 ist eine vertikale Trennwand 32 angeordnet, um zu vermeiden, daß Granulatkörner direkt von der Zufuhrstelle zum Austragsspalt 25 springen. Aus Strömungsgründen kann die Trennwand 32 ganz oder teilweise aus Lochblech bestehen.

Ungefähr auf der Höhe des Austragsspaltes 25 erweitert sich der Behälter 21 in einen Uebergangsteil 33, der zum Oberteil 34 führt. Damit vermindert sich die Geschwindigkeit des Behandlungsgases, so daß mitgerissene Körner in die Wirbelschicht zurückfallen.

Der aktive Teil des Wirbelbettes im Behälter 21 hat eine Länge $l_1$, die in Richtung der horizontalen Komponente des Weges zwischen der Zufuhrstelle 31 und dem Austragsspalt 25 gemessen wird. Seine Höhe $h_1$ ist gemessen zwischen dem Lochboden 22 und dem unteren Rand 29 des Austragsspaltes 25.

Um eine sichere und rasche Vermischung des Granulates im Wirbelbett zu gewährleisten wählt man den Koeffizienten $K_1 = l_1/h_1$ von 0,5 bis 1,5. Die Breite $b_1$ ist weniger kritisch, soll aber nicht zu klein gewählt werden.

Bei einer Versuchsanlage wurden $l_1 = h_1 = 0,6m$ gewählt. Somit war $K_1 = 1$. Für einen anderen Versuch wurden $l_1 = 0,6m$ und $h_1 = 0,9m$ gewählt. Damit war der Koeffizient $K_1 = 0,66$. Dabei ist die Breite $b_1 = 0,5m$, d.h. zweimal größer als im Beispiel der ersten Versuchsanlage. Bei noch größeren Geräten wird $l_1$ viel rascher steigen als $h_1$, sodaß ein Koeffizient von ungefähr $K_1 = 2$ erreicht werden wird.

Vorteilhaft ist eine Oberflächenbehandlung der mit dem Polyestermaterial in Berührung kommenden Flächen des Behälters 21 um Ankleben zu vermeiden. Diese Wirkung erreicht man durch entweder eine PTFE-Polytetrafluoräthylen-Beschichtung oder ein Perlstrahlen der Innenfläche. PTFE hat die niedrigste Oberflächenenergie aller Stoffe und so bleibt nichts haften. Beim Perlstrahlen entsteht eine strukturierte Oberfläche mit vorstehenden Punkten und Kanten mit Bildung kleiner Krater, was die Kontaktfläche stark reduziert.

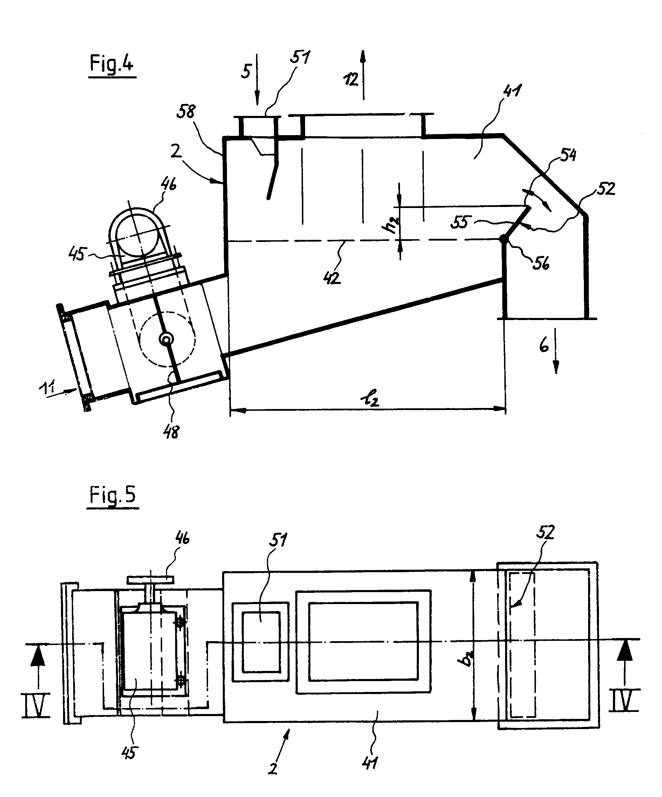

Das in den Fig. 4, 5 dargestellte zweite Wirbelbett, d.h. das Fließbett 2 weist einen kanalförmigen Behälter 41 auf, der unten mit einem Lochboden 42 versehen ist, dem der Strom 11 des Behandlungsgases zugeführt wird. Das Abgas 12 entweicht oben und wird meistens im Rundlauf zurückgeführt.

Der Strom 11 des Behandlungsgases wird über eine durch einen Motor 45 und einen Riementrieb 46 angetriebene drehende Klappe 48 geleitet, die eine Gaspulsation erzeugt. Wie in der DE-PS 21 01 143 gezeigt kann die Klappe 48 mehrfach vorgesehen werden, damit verschiedene Teile des Lochbodens 42 mit zeitlich verschobenen Gaspulsationen beaufschlagt werden.

Der Granulatstrom 5 gelangt durch einen Einlauf 51 in den Behälter 41. Der Strom 6 des behandelten Granulates tritt aus dem Behälter 41 über ein Wehr 52 dessen oberer Rand 54 durch eine schräg einstellbare Platte 55 gebildet ist, die mittels eines Scharniers um die horizontale Achse 56 schwenkbar ist. Damit ist die Höhenlage des Wehres 52 einstellbar, beziehungsweise regulierbar.

Der aktive Teil des Wirbelbettes im Behälter 41 hat eine Länge $l_2$, die zwischen der am Einlauf 43 grenzenden Wand 58 und dem Wehr 45 gemessen wird. Die Höhe $h_2$ wird gemessen zwischen dem Lochboden 42 und dem oberen Rand des Wehrs 45.

Mit Vorteil wählt man den Koeffizenten $K_2 = l_2/h_2$ von 2,5 bis 1o, vorzugsweise 4 bis 8. Für eine industrielle Anlage kann man $l_2 = 0,95m$ und $h_2 = 0,2m$ wählen. Damit ist der Koeffizient $K_2 = 4,75$ bei einer Breite $b_3 = 0,3m$.

Für die Kristallisation könnte man sich auch einen Kombiapparat vorstellen, der sowohl ein Sprudel- als auch ein Fließbett enthält und eventuell mit nur einem Gaskreislauf auskommt.

<u>Beispiel 1:</u>

Als amorphes Ausgangsmaterial wurde ein kantiges Stranggranulat mit den Dimensionen ca. 2x2x3mm verwendet. Von der Zusammensetzung her handelte es sich um einen Copolyester, bestehend aus Terephthalsäure und den beiden Diol-Komponenten Aethylenglykol und Cyclohexan-1,4-dimethylol im Molverhältnis 96,5:3,5. Die Intrinsic-Viskosität betrug 0,57 dl/g, gemessen in einem Lösungsmittelgemisch von Phenol und 1,1,2,2-Tetrachloräthan im Verhältnis von 60:40 Gewichtsprozent. Dieses Material zeigt bei der Kristallisation ein sehr klebriges Verhalten. Mit einem Durchsatz von 60kg/h wurde es in einer Pilotanlage in einen Sprudelreaktor 1 eindosiert. Die mittlere Verweilzeit darin betrug 40 Minuten. Die heisse Zuluft hatte eine Temperatur von 170°C und eine Anströmgeschwindigkeit von 3,1m/s. Diese Anströmgeschwindigkeit bezieht sich auf die ganze Fläche des Lochbodens 21, weil die Luft sich fast unmittelbar oberhalb dieses Lochbodens 21 auf dem ganzen horizontalen Querschnitt (Grundfläche) des Wirbelbettes 1 verteilt. Der spezifische Luftverbrauch betrug 12,3 $m_n^3$ pro kg Granulatdurchsatz. Die mittlere Granulattemperatur betrug 160°C, mit welcher der Produktstrom im das Wirbelbett 2 geleitet wurde. Dort wurde das Granulat mit Zuluft von 180°C bei einer mittleren (pulsierenden) Ausströmgeschwindigkeit von 1,2 m/s während 15 Minuten behandelt. Das fertig kristallisierte Produkt wurde schließlich bei einer Temperatur von ca. 100°C durch einen Wurfbrecher 3 strömen gelassen, wo die Agglomerate bei einer Rotorumfangsgeschwindigkeit von 25m/s in ein einwandfreies Einzelgranulat zerfielen. Der ganze Prozess, insbesondere das Sprudelbett 1, liefen während der ganzen Testphase absolut stabil, ohne Störungen durch Anbackungen oder Verklumpungen. Die Kleinagglomerate waren im Prozeß rein optisch kaum zu erkennen. Der Agglomeratanteil (aussortiert ohne Ausübung von Kraft) sowie ihre Größenverteilung waren an den verschiedenen Punkten des Prozesses (vgl. Fig. 1) wie folgt (Tabelle 1):

Tabelle 1

| Agglomerate (Anteile in Gewichts-%) | amorphes Ausgangsgranulat (4) | nach Sprudelbett (5) | nach Fliessbett (6) | vor Wurfbrecher (7) | nach Wurfbrecher (8) |
|---|---|---|---|---|---|
| Totalanteil | 4,3 | 51,4 | 49,3 | 38,5 | 3,2 |
| davon Paare | 100 | 68,5 | 64,9 | 83,1 | 100 |
| davon Dreier | - | 21,3 | 24,0 | 13,2 | - |
| Vierer u.mehr | - | 10,2 | 11,1 | 3,7 | - |

Man sieht, daß die Agglomerate im Sprudelbett 1 entstehen, diese sind aber so schwach, dass sie bereits auf dem Transport zum Wurfbrecher 3 teilweise zerfallen. Als Maß für den Kristallinitätsgrad wurde die Dichte gemessen. Für die Umrechnung gilt:

$$K = \frac{\rho_c}{\rho} \cdot \frac{\rho - \rho_a}{\rho_c - \rho_a}$$

K = gewichtsbezogener kristalliner Anteil

$\rho$ = gemessene mittlere Polymerdichte eines Granulatkornes

$\rho_a$ = Dichte von völlig amorphem Polymer

$\rho_c$ = Dichte von 100% kristallinem Polymer (theoretischer Wert, berechnet aus den Abmessungen einer kristallinen Elementarzelle).

Für die Grenzwerte von PET (bei 20 °C) gilt gemäss J. Brandrup, E.H. Immergut: Polymer Handbook, 2nd Edition 1975, Wiley-Interscience:

= 1,335 g/cm$^3$

= 1,455 g/cm$^3$.

Um den momentanen Zustand einzufrieren, wurden die Proben für die Dichtemessung sofort in kaltem Wasser abgeschreckt. Nach dem Sprudelbett 1 war die Dichteverteilung noch erwartungsgemäß breit, d.h. sie reichte von 1,325 (ca. 3,5% noch transparente, amorphe Granulatkörner) bis 1, 365 (kristalliner Hauptanteil). Die Granulatkörner nach dem Wirbelbett 2 wiesen jedoch eine überraschend enge Verteilung, ja praktisch einen einheitlichen Wert von 1,365 ± 0,001 g/cm$^3$ (Grenzen der Extremwerte an 100 repräsentativen Körnern) auf. Dieser Wert entspricht ca. 33% Kristallinitätsgrad, wenn man annehmen darf, daß $\rho_a$ für den vorliegenden Copolyester ca. 1,325 beträgt.

Allfällige Bedenken, das Granulat könnte wegen den teilweisen langen Verweilzeiten in der heißen Luft eventuell oxidativ geschädigt werden, wurden durch Farbwertmessungen widerlegt: Im gebräuchlichen Farbmaßsystem L*a*b* lagen die b*-Werte aller, auch nach mehreren Stunden genommenen Proben leicht im negativen Bereich (ca. -0,7), was bedeutet, daß anstelle eines auf Schädigung hinweisenden Gelbstiches (positive b*-Werte) tendenziell eher eine leichter Blauton vorlag.

Weitere Beispiele:

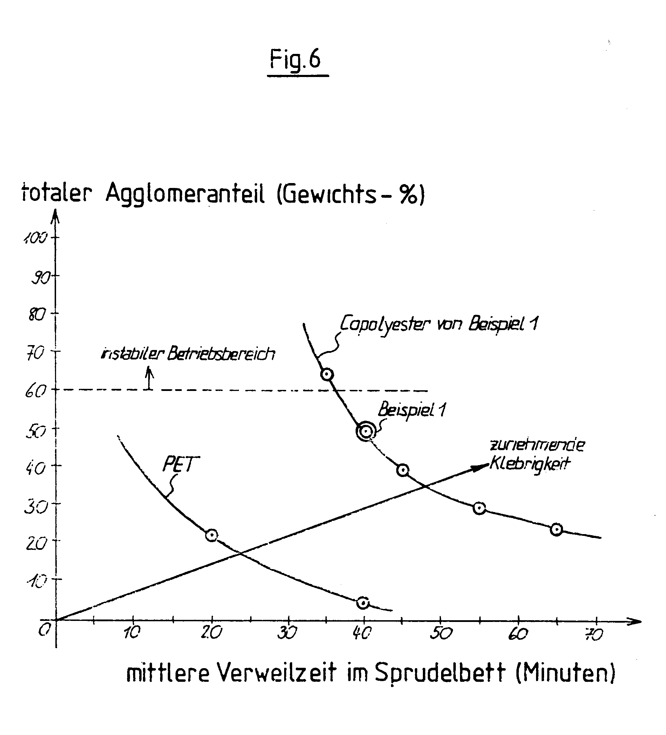

In weiteren Versuchsvarianten wurde bei sonst gleichen Einstellungen der Einfluß der mittleren Verweilzeit im Sprudelbett 1 auf die Agglomeratbildung untersucht. Es ergab sich die in Fig. 6 dargestellte Abhängigkeit. Bei zu kurzer Verweilzeit entstanden so viele Agglomerate (über 60%), daß das Sprudelbett 1 keinen stabilen Zustand mehr erreichte und durch stärker werdende Verklebung "umkippte", was jeweils kurz vor dem Kollaps bereits an der enger werdenden Schwankungsbreite des Druckabfalls über das Sprudelbett 1 vorauszusehen war. Unterhalb der kritischen Grenze nimmt der Agglomeratanteil mit zunehmender Verweilzeit ab. Um das Sprudelbett 1 aber nicht größer als nötig zu bauen, wird vorteilhafterweise eine nicht allzu weit von der kritischen Grenze entfernte Verweilzeit gewählt, wie dies im Beispiel 1 der Fall war. Zum Vergleich wurde auch noch ein normales PET (Homopolymer) eingesetzt, das erahnen läßt, um wieviel klebriger der Copolyester war.

Im ersten Wirbelbett 1 wird mit Vorteil ein spezifischer Gasdurchsatz von 5-20m$_n^3$ insbesondere 12 m$_n^3$ pro kg Granulatdurchsatz gewählt. Die Anströmgeschwindigkeit beträgt 2-6 m/sec., vorzugsweise 2,5-3,5 m/sec, insbesondere 3m/sec.

EP 0 379 684 B1

Im zweiten Wirbelbett 2 wird mit Vorteil ein spezifischer Gasdurchsatz von 2-8$m_n^3$ , insbesondere 4$m_n^3$ pro kg Granulatdurchsatz gewählt. Die Anströmgeschwindigkeit beträgt 0,8-3m/sec., vorzugsweise 1-1,5 m/sec, insbesondere 1,2 m/sec.

**Patentansprüche**

1. Verfahren zum kontinuierlichen Kristallisieren von Polyestermaterial, wie Granulat oder grobem Pulver, unter Anwendung an sich bekannter Wirbelbetten mit Mischcharakteristik dadurch gekennzeichnet, daß Polyestermaterial durch zwei hintereinandergeschaltete Wirbelbetten (1, 2) geführt wird, von denen das erste eine sprudelnde Wirbelschicht (1) mit Mischcharakteristik, und das zweite ein Fließbett (2) mit Kolbenströmungscharakteristik ist.

2. Verfahren nach Anspruch 1, dadurch gekennzeichnet, daß wenigstens eines der folgenden Merkmale vorgesehen ist:
   a) im ersten Wirbelbett (1) erreicht die Temperatur der Granulate 140°C bis 180°C, vorzugsweise 160°C, wobei die mittlere Verweilzeit 5-60 min., bei klebrigen Copolyestern auch über 60 min., beträgt;
   b) die Eintrittstemperatur des Behandlungsgases beträgt beim ersten Wirbelbett (1) 150°C bis 190°C, vorzugsweise 170°C bis 175°C;
   c) im ersten Wirbelbett (1) beträgt der spezifische Gasdurchsatz 3-30 $m_n^3$ pro kg Granulatdurchsatz, vorzugsweise 5 bis 20 $m_n^3$ , insbesondere 12 $m_n^3$ , wobei die Anströmgeschwindigkeit 2-6 m/sec beträgt, vorzugsweise 2,5 bis 3,5 m/sec, insbesondere 3 m/sec;
   d) im zweiten Wirbelbett (2) wird die Temperatur der Granulate um 10-30°C erhöht, vorzugsweise auf 180°C, wobei die mittlere Verweilzeit 2-25 min. beträgt, vorzugsweise 15 min;
   e) die Eintrittstemperatur des Behandlungsgases beträgt beim zweiten Wirbelbett (2) 0-20°C und liegt vorzugsweise ca. 10°C über der jenigen des Behandlungsgases im ersten Wirbelbett (1);
   f) im zweiten Wirbelbett (2) beträgt der spezifische Gasdurchsatz 1,5-15 $m_n^3$ pro kg Granulatdurchsatz, vorzugsweise 2-8 $m_n^3$ , insbesondere 4 $m_n^3$ , wobei die Anströmgeschwindigkeit 0,8-3 m/sec, vorzugsweise 1-1,5 m/sec, insbesondere 1,2 m/sec beträgt;
   g) der Anteil der noch amorphen Granulatkörner die vom ersten (1) zum zweiten Wirbelbett (2) übergehen, beträgt 2 bis 5%, vorzugsweise 3 bis 4%;
   h) der Koeffizient $K_1$, der durch das Verhältnis der Länge $l_1$ zur Höhe $h_1$ des ersten Wirbelbettes (1) gebildet wird, beträgt 0,5 bis 2, insbesondere 1;
   i) der Koeffizient $K_2$, der durch das Verhältnis der Länge $l_2$ zur Höhe $h_2$ des zweiten Wirbelbettes (2) gebildet wird, beträgt 2,5 bis 10, vorzugsweise 4 bis 8, insbesondere 5;
   j) das Verhältnis des Koeffizienten $K_2$ des zweiten Wirbelbettes (2) ($K_2$ = Länge $l_2$/Höhe $h_2$) zum Koeffizienten $K_1$ des ersten Wirbelbettes (1) ($K_1$ = Länge $l_1$/Höhe $h_1$), ist grösser als 2, insbesondere grösser als 3.

3. Verfahren nach Anspruch 1 oder 2, dadurch gekennzeichnet, daß nach dem zweiten Wirbelbett (2) das Polyestermaterial in einer Prallvorrichtung (3) zum Nachzerkleinern der Kleinagglomerate geprallt wird.

4. Verfahren nach Anspruch 3, dadurch gekennzeichnet, daß das Prallen direkt nach dem zweiten Wirbelbett (2) erfolgt.

5. Verfahren nach Anspruch 3, dadurch gekennzeichnet, daß das Produkt nach dem zweiten Wirbelbett (2) und vor dem Prallen einer Nachtrocknung, bzw. einer Nachkondensation, bzw. einer Kühlung, z.B. in einem Schachttrockner, bzw. -kühler, unterzogen wird.

6. Verfahren nach einem der Ansprüche 3, 4 oder 5, dadurch gekennzeichnet, daß wenigstens eines der folgenden Merkmale vorgesehen ist:
   a) das Produkt wird vor dem Prallen gelagert;
   b) das Prallen geschieht mit einer Aufprallgeschwindigkeit von 10 bis 50 m/sec, vorzugsweise 20 bis 35 m/sec, insbesondere 25m/sec;
   c) das Produkt wird durch das Fördern in einer pneumatischen Förderleitung geprallt;
   d) das Produkt wird durch Umlaufprall, z.B. in einem zentrifugalen Impactor (3) geprallt, wobei die Umfangsgeschwindigkeit ca. 25 m/sec, bei einem Rotordurchmesser von 0,4 m und einer Drehzahl von 1200 U/min. beträgt.

8

**7.** Vorrichtung zur Ausführung des Verfahrens unter Anwendung an sich bekannter Wirbelbetten mit Mischcharakteristik nach einem der Ansprüche 1 bis 6, dadurch gekennzeichnet, daß einem ersten Wirbelbett (1) mit Mischcharakteristik ein zweites Wirbelbett (2) mit Kolbenströmungscharakteristik nachgeschaltet ist.

**8.** Vorrichtung nach Anspruch 7, dadurch gekennzeichnet, daß wenigstens eines der folgenden Merkmale vorgesehen ist:

a) das erste Wirbelbett (1) weist einen Behälter (21) auf, dessen Austragswehr (29) auf einer Höhe $h_1$ liegt, die bei einer Länge $l_1$ des Behälters (21) einen Koeffizienten $K_1 = l_1/h_1$ von 0,5 bis 2 ergibt, insbesondere 1;

b) der Behälter (21) des ersten Wirbelbettes (1) erweitert sich oberhalb des Wehrs (29) (Übergangsteil 33), wobei die Durchgangsfläche für das Granulat als Austragsspalt (25) ausgebildet ist, und wobei der untere (29) und der obere Rand (27) dieses Austragsspaltes (25) durch vertikale bewegliche Platten (30, 28) gebildet sind, die eine Regulierung der Höhenlage und der Breite des Austragsspaltes (25) erlauben;

c) zwischen der Zufuhrstelle (31) für die Granulatkörner und dem Austragsspalt (25) des ersten Wirbelbettes (1) ist eine vertikale Trennwand (32) vorhanden, um zu vermeiden, daß Granulatkörner direkt von der Zufuhrstelle (31) zum Austragsspalt (25) springen;

d) eine Antikleb-Oberflächenbehandlung der mit dem Polyestermaterial in Berührung kommenden Flächen des Behälters (21) des ersten Wirbelbettes (1) ist vorgesehen, um ein Ankleben zu vermeiden, wobei z.B. ein Beschichten mit Polytetrafluoräthylen oder ein Perlstrahlen in Frage kommen;

e) das zweite Wirbelbett (2) weist einen, vorzugsweise kanalförmigen, Behälter (41) auf, dessen Austragswehr (52) auf einer Höhe $(h_2)$ liegt, die bei einer Länge $l_2$ des Behälters einen Koeffizienten $K_2 = l_2/h_2$ von 2,5 bis 10, ergibt, vorzugsweise 4 bis 8, insbesondere 5, wobei zweckmässig die Höhe $(h_2)$ des Austragswehrs (52) einstellbar ist;

f) das Verhältnis des Koeffizienten $K_2$ zum Koeffizienten $K_1$ ist größer als 2, insbesondere größer als 3;

g) die Luftzufuhr (11) zu mindestens einem der Wirbelbetten (1 bzw. 2), vorzugsweise des zweiten (2), erfolgt über eine Gaspulsationseinrichtung (45-48), die insbesondere verschiedene Teile des Lochbodens (42) mit zeitlich verschobenen Gaspulsationen beaufschlagt;

h) ein kombinierter Apparat enthält die beiden Wirbelbetten (1, 2), gegebenenfalls übereinanderliegend, wobei ein einziger Gaskreislauf (11, 12, 9, 10) vorgesehen ist.

**9.** Vorrichtung nach Anspruch 7 oder 8, dadurch gekennzeichnet, daß dem Wirbelbett (2) mit Kolbenströmungscharakteristik eine Prallvorrichtung (3) unmittelbar oder nach Weiterbehandlungsapparaten bzw. einer Lagerung nachgeschaltet ist,

wobei die Prallvorrichtung (3) vorzugsweise

entweder eine pneumatische Förderleitung

und/oder

einen Impactor mit einem Schleuderrotor aufweist, der die Körner gegen einen Ring oder gegen Prallplatten wirft, wobei die Prallplatten vorzugsweise um parallel zur Achse des Rotors liegenden Achsen einstellbar sind, um einen rechtwinkligen Aufprall zu ermöglichen.

**10.** Anwendung des Verfahrens nach einem der Ansprüche 1 bis 6 und/oder der Vorrichtung nach einem der Ansprüche 7 bis 9 für die Behandlung von klebrigen Copolyestern.

**Claims**

**1.** Process for the continuous crystallisation of polyester material, such as granulate or coarse powder, with the use of per se known fluidised beds with a mixing characteristic, characterised in that polyester material is conducted through two fluidised beds (1, 2) connected one behind the other, whereof the first is a bubbling-action fluidised bed (1) with a mixing characteristic, and the second is a continuous bed (2) with a slug-type flow characteristic.

**2.** Process according to claim 1, characterised in that at least one of the following features is provided:

a) in the first fluidised bed (1) the temperature of the granulates reaches 140°C to 180°C, preferably 160°C, the mean time of dwell amounting to 5-60 min, in the case of sticky copolyesters

9

even more than 60 min;

b) the entry temperature of the treatment gas in the first fluidised bed (1) amounts to 150°C to 190°C, preferably 170°C to 175°C;

c) in the first fluidised bed (1) the gas throughput rate amounts to 3-30 $m_n^3$ per kg of granulate throughput, preferably 5 to 20 $m_n^3$, especially 12 $m_n^3$, and the incident flow speed amounts to 2-6 m/sec, preferably 2.5 to 3.5 m/sec, especially 3 m/sec;

d) in the second fluidised bed (2) the temperature of the granulates is increased by 10-30°C, preferably to 180°C, the mean dwell time amounting to 2-25 min, preferably 15 min.

e) the entry temperature of the treatment gas in the case of the second fluidised bed (2) amounts to 0-20°C, and is preferably approx. 10°C above that of the treatment gas in the first fluidised bed (1);

f) in the second fluidised bed (2) the gas throughput rate amounts to 1.5-15 $m_n^3$ per kg of granulate throughput, preferably 2-8 $m_n^3$, especially 4 $m_n^3$, the incident flow speed amounting to 0.8-3 m/sec, preferably 1-1.5 m/sec, especially 1.2 m/sec;

g) the fraction of still amorphous granulate grains transferring from the first (1) to the second (2) fluidised bed amounts to 2 to 5%, preferably 3 to 4%;

h) the coefficient $K_1$ formed by the ratio of the length $l_1$ to height $h_1$ of the first fluidised bed (1) amounts to 0.5 to 2, especially 1;

i) the coefficient $K_2$ formed by the ratio of the length $l_2$ to the height $h_2$ of the second fluidised bed (2) amounts to 2.5 to 10, preferably 4 to 8, especially 5;

j) the ratio of the coefficient $K_2$ of the second fluidised bed (2) ($K_2$ = length $l_2$/height $h_2$) to the coefficient $K_1$ of the first fluidised bed (1) ($K_1$ = length $l_1$/height $h_1$) is greater than 2, especially greater then 3.

3. Process according to claim 1 or 2, characterised in that after the second fluidised bed (2) the polyester material is impact-treated in an impact device (3) for the after-comminuting of the small agglomerates.

4. Process according to claim 3, characterised in that the impact treatment is carried out immediately after the second fluidised bed (2).

5. Process according to claim 3, characterised in that after the second fluidised bed (2) and before the impact stage the product is subjected to after-drying, or after-condensation, or cooling, e.g. in a shaft-type drier or cooling apparatus.

6. Process according to one of claims 3, 4 or 5, characterised in that at least one of the following features is provided:

a) the product is stored before the impact treatment;

b) the impact treatment is carried out with an impact speed of 10 to 50 m/sec, preferably 20 to 35 m/sec, especially 25 m/sec;

c) the product is impact-treated by conveyance in a pneumatic conveying conduit;

d) the product is impact-treated by rotation impact e.g. in a centrifugal impactor (3), the peripheral speed amounting to approx. 25 m/sec, with a rotor diameter of 0.4 m and a rotational speed of 1200 r.p.m.

7. Apparatus for carrying out the process with the use of per se known fluidised beds with mixing characteristic according to one of claims 1 to 6, characterised in that a second fluidised bed (2) which has a slug flow characteristic is connected downstream of a first fluidised bed (1) which has a mixing characteristic.

8. Apparatus according to claim 7, characterised in that at least one of the following features is provided:

a) the first fluidised bed (1) comprises a container (21) whose discharge weir (29) is situated at a height $h_1$ which, if the length of the container (21) is $l_1$, gives a coefficient $K_1$ = $l_1/h_1$ of 0.5 to 2, especially 1;

b) The container (21) of the first fluidised bed (1) widens above the weir (29) (transition portion 33), the through passage area for the granulate being constructed as a discharge gap (25), and the lower (29) edge and upper (27) edge of this discharge gap (25) are formed by vertically movable plates (30, 28) which allow regulation of the height situation and the width of the discharge gap (25);

c) between on the one hand the infeed point (31) for the granulate grains and on the other hand the discharge gap (25) of the first fluidised bed (1) there is provided a vertical partition wall (32), to

EP 0 379 684 B1

prevent granulate grains from jumping directly from the infeed point (31) to the discharge gap (25);

d) an anti-sticking surface treatment of those surfaces of the container (21) of the first fluidised bed (1) which come into physical contact with the polyester material is provided for the purpose of obviating sticking-on, this involving e.g. coating with polytetrafluoroethylene, or bead-blasting;

e) the second fluidised bed (2) comprises a preferably channel-form container (41) whose discharge weir (52 is situated at a height ($h_2$) which, when the container has a length $l_2$, gives a coefficient $K_2$ = $l_2/h_2$ of 2.5 to 10, preferably 4 to 8, especially 5, and advantageously the height ($h_2$) of the discharge weir (52) is adjustable;

f) the ratio of the coefficient $K_2$ to the coefficient $K_1$ is greater than 2, especially greater than 3;

g) the air infeed (11) to at least one of the fluidised beds (1 or 2), preferably the second (2), is effected by way of a gas pulsation device (45-48) which causes gas pulsations offset in time to act upon especially different portions of the perforated floor (42);

h) a combined apparatus contains both fluidised beds (1, 2), possibly arranged one above the other, and a single gas circuit (11, 12, 9, 10) is provided.

9. Apparatus according to claim 7 or 8, characterised in that an impact device (3) is connected downstream to the fluidised bed (2) having the slug flow characteristic, being arranged immediately downstream or after further-treatment apparatus or a storage stage, the impact device (3) preferably comprising either a pneumatic conveying conduit and/or an impactor provided with a centrifuging rotor which throws the grains against a ring or against baffle plates, the baffle plates being adjustable preferably about axes situated parallel to the rotor axis, to allow impact at right angles.

10. Use of the process according to one of claims 1 to 6 and/or the apparatus according to one of claims 7 to 9 for the treatment of tacky copolyesters.

**Revendications**

1. Procédé de cristallisation en continu de polyester, se présentant sous forme de granulat ou de poudre grossière, avec utilisation de lits fluidisés, connu en soi, présentant des caractéristiques de mélange données, caractérisé en ce que le polyester est passé dans deux lits fluidisés (1, 2) mis en circuit l'un derrière l'autre, dont le premier présente un lit fluidisé (1) à effet bouillonnant, présentant une première caractéristique de mélange, et le deuxième présente un lit fluidisé agité (2), avec une caractéristique d'écoulement pulsatoire.

2. Procédé selon la revendication 1, caractérisé en ce qu'au moins l'une des caractéristiques suivantes est prévue :

a) dans le premier lit fluidisé (1), la température des granulats atteint 140° C à 180° C, de préférence 160° C, le temps de séjour moyen étant de 5 à 60 min, tout en étant également supérieur à 60 min dans le cas où l'on a à faire à des copolymères collants ;

b) la température d'entrée du gaz de traitement dans le premier lit fluidisé (1) est de 150° C à 190° C, de préférence de 170° C à 175° C;

c) le débit spécifique de gaz dans le premier lit fluidisé (1) est de 3 à 30 $m_n^3$ par kg de débit de granulats, de préférence de 5 à 20 $m_n^3$, en particulier 12 $m_n^3$, la vitesse d'arrivée d'écoulement étant de 2 à 6 m/s, de préférence de 2,5 à 3,5 m/s, en particulier de 3 m/s.

d) dans le deuxième lit fluidisé (2), la température des granulats est augmentée de 10 à 30° C, en atteignant de préférence 180° C, le temps de séjour moyen étant de 2 à 25 min. de préférence de 15 min;

e) la température d'entrée du gaz de traitement dans le deuxième lit fluidisé (2) est supérieure de 0 à 20° C et, de préférence, d'à peu près 10° C, à celle du gaz de traitement dans le premier lit fluidisé 1;

f) le débit spécifique de gaz dans le deuxième lit fluidisé (2) est de 1,5 à 15 $m_n^3$ par kg de débit de granulats, de préférence de 2 à 8 $m_n^3$, en particulier de 4 $m_n^3$, la vitesse d'arrivée d'écoulement est de 0,8 à 3 m/s, de préférence de 1 à 1,5 m/s, en particulier de 1,2 m/s;

g) la proportion de grains de granulats encore amorphe, passant du premier lit fluidisé (1) au deuxième lit fluidisé (2) est d'à peu près 2 à 5 %, de préférence de 3 à 4 %;

h) le coefficient $K_1$, formé par le rapport entre la longueur $l_1$ et la hauteur $h_1$ du premier lit fluidisé (1) est de 0,5 à 2, en particulier de 1;

11

i) le coefficient $K_2$, formé par le rapport entre la longueur $l_2$ et la hauteur $h_2$ du deuxième lit fluidisé (2) est de 2,5 à 10, de préférence de 4 à 8, en particulier de 5;

j) le rapport entre le coefficient $K_2$ du deuxième lit fluidisé (2) ($K_2$ = longueur $l_2$/hauteur $h_2$) et le coefficient $K_1$ du premier lit fluidisé (1) ($K_1$ = longueur $l_1$/hauteur $h_1$), est supérieur à 2, en particulier supérieur à 3;

3. Procédé selon la revendication 1 ou 2, caractérisé en ce qu'après le deuxième lit fluidisé (2) le polyester est soumis à un impact dans un dispositif d'impact (3) destiné à diminuer par broyage la taille des petits agglomérats.

4. Procédé selon la revendication 3, caractérisé en ce que l'impact s'effectue directement après le deuxième lit fluidisé (2).

5. Procédé selon la revendication 3, caractérisé en ce qu'après le deuxième lit fluidisé (2) et avant l'impact, le produit est soumis à un post-séchage, respectivement une post-condensation, respectivement à un refroidissement, par exemple dans un sécheur à sas respectivement un refroidisseur à sas.

6. Procédé selon l'une des revendications 3, 4 ou 5 caractérisé en ce qu'est prévue au moins l'une des caractéristiques suivantes :

a) le produit est stocké avant l'étape d'impact;

b) l'impact s'effectue avec une vitesse de choc allant de 10 à 50 m/s, de préférence de 20 à 35 m/s, en particulier de 25 m/s;

c) le produit est soumis aux chocs, au moyen d'un transport dans une conduite de transfert pneumatique.

d) le produit est soumis à l'étape d'impact, au moyen d'un impact giratoire, par exemple dans un appareil à choc centrifuge (3), la vitesse périphérique étant d'à peu près 25 m/s, pour un diamètre de rotor de 0,4 m et une vitesse de rotation de 1200 tour/min.

7. Dispositif pour mettre en oeuvre le procédé avec utilisation de lits fluidisés connus en soi, présentant des caractéristiques de mélange données, selon l'une des revendications 1 à 6, caractérisé en ce que un deuxième lit fluidisé (2) à caractéristiques d'écoulement pulsatoire est mis en circuit en aval du premier lit fluidisé (1).

8. Dispositif selon la revendication 7, caractérisé en ce qu'au moins l'une des caractéristiques suivantes est prévue :

a) le premier lit fluidisé (1) présente un récipient (21) dont le déversoir (29) est situé à un niveau $h_1$ qui, pour une longueur $l_1$ du récipient (1) donne un coefficient $K_1$ = $l_1/h_1$ compris entre 0,5 et 2, valant en particulier 1;

b) le récipient (21) du premier lit fluidisé (1) s'élargit au dessus de déversoir (29) (partie de transition 33), la surface de passage pour le granulat étant réalisée sous forme de fente d'évacuation (25), et le bord inférieur (29) et le bord supérieur (27) de cet interstice d'évacuation (25) étant formés par des plaques verticales, (30, 28) déplacables, permettant d'opérer un réglage du niveau et de la largeur de l'interstice d'évacuation (25);

c) une paroi de séparation verticale (32) est prévue entre le point d'amenée (31) des grains de granulat et l'interstice d'évacuation (25) du premier lit fluidisé (1), pour éviter que des grains de granulat sautent directement du point d'amenée (31) à l'interstice d'évacuation (25).

d) un traitement de surface anti-adhésif est prévu pour les surfaces, venant en contact avec le polyester, du récipient (21) du premier lit fluidisé, afin d'éviter tout collage, par un revêtement en polytétrafluoréthylène, ou une projection de billes pouvant être par exemple envisagée;

e) le deuxième lit fluidisé (2) présente un récipient (41), se présentant de préférence sous forme de canal, dont le déversoir (52) est situé à un niveau ($h_2$), donnant, pour une longueur $l_2$ du récipient, un coefficient $K_2$ = $l_2/h_2$ compris entre 2,5 et 10, de préférence entre 4 et 8, valant en particulier 5, la hauteur ($h_2$) du déversoir (52) étant réglable de manière appropriée;

f) le rapport entre les coefficients $K_2$ et $K_1$ est supérieur à 2, en particulier supérieur à 3;

g) l'amenée d'air (11) à au moins l'un des lits fluidisés (1 respectivement 2), de préférence au deuxième (2), s'effectue par l'intermédiaire d'un dispositif à pulsation de gaz (45 à 48), sollicitant en particulier différentes parties du fond perforé (12), avec des pulsations de gaz décalées temporellement;

12

h) un appareil combiné recoit les deux lits fluidisés (1, 2), le cas échéant de façon superposés, en prévoyant un seul circuit de gaz, (11, 12, 9, 10).

**9.** Dispositif selon la revendication 7 ou 8, caractérisé en ce qu'après le lit fluidisé (2) présentant une caractéristique d'écoulement pulsatoire, est mis en circuit un dispositif d'impact (3), directement ou après des appareils de retraitement, respectivement après un stockage,

le dispositif d'impact (3) présentant de préférence soit une conduite de transfert pneumatique et/ou un appareil à chocs, avec un rotor éjecteur, projetant les grains contre un anneau contre des plaques d'impact, les plaques d'impact étant réglables de préférence autour d'axes parallèles à l'axe du rotor, afin de permettre que l'impact se fasse à angle droit.

**10.** Mise en oeuvre du procédé selon l'une des revendications 1 à 6, et/ou du dispositif selon l'une des revendications 7 à 9, pour le traitement de copolyesters collant.

<u>Fig.1</u>

→ = Granulat

⇢ = Gas

EP 0 379 684 B1

Fig. 2

Fig. 3

Fig.4

Fig.5

## Fig.6

totaler Agglomeranteil (Gewichts – %)

100
90
80
70
60
50
40
30
20
10

instabiler Betriebsbereich

Copolyester von Beispiel 1

Beispiel 1

PET

zunehmende Klebrigkeit

O    10    20    30    40    50    60    70

mittlere Verweilzeit im Sprudelbett (Minuten)

17